# EUROPEAN PATENT SPECIFICATION

(11) **EP 2 910 301 B1**
(45) Date of publication and mention of the grant of the patent: **31.08.2016**
(21) Application number: 15153581.2
(22) Date of filing: 03.02.2015
(51) Int. Cl.: B01F 5/06, B21D 11/07, B21D 11/10, F01N 3/28

(54) **Machine and method to produce urea mixers for exhaust devices of vehicles with internal-combustion engines**
Maschine und Verfahren zur Herstellung von Harnstoffmischern für Abgasanlagen von Fahrzeugen mit Verbrennungsmotoren
Dispositif et procédé pour produire des mélangeurs de l'urée pour dispositifs d'échappement de véhicules à moteurs à combustion interne

(30) Priority: 21.02.2014 IT FI20140039
(43) Date of publication of application: 26.08.2015
(73) Proprietor: Modulo S.R.L., 06019 Umbertide (PG) (IT)
(72) Inventor: Merla, Maurizio, 06019 Umbertide (PG) (IT)
(74) Representative: Fanfani, Stefano

(56) References cited:
- EP-A1- 2 098 697
- WO-A1-2009/049790
- US-A- 4 765 204
- US-A1- 2010 218 490

## Description

### Technical field

The present invention pertains to the sector of the machines used to manufacture the components necessary to the automotive industry and in particular it refers to a machine and a method according to the preambles of claims 1 and 8 respectively used for the large-scale production of special components, called urea mixers, used in the realization of internal combustion engine exhaust gas abatement devices.

### State of the art

The present anti-pollution regulations, and even more those which will come into force in the future, introduce severe objectives of reduction of the emissions of nitrogen oxides produced by the diesel engines used for vehicle motorization.

The selective catalytic reduction of the nitrogen oxides, which is obtained by spraying urea on the catalyst, is by now one of the most used techniques to get such reductions; specifically, an urea solution is injected into the exhaust gas stream, which mixes with the hot exhaust gas and, consequently, evaporates and decomposes into ammonia before passing through the catalyst.

In this process, especially at low temperatures, urea mixers play a crucial role to provide an efficient evaporation and mixing, failing which undesired deposits settle, notwithstanding the significant obstacles originating from the fact that urea is injected in its liquid phase.

Many efforts have been made to develop urea mixers and they mainly focus on making the reduction of nitrogen oxides efficient and the spread of urea in the exhaust gas stream, uniform. Also, mixer shall also meet other requirements, including a low flow resistance, a high mechanical strength, a low production cost, and an easy and cost effective engineerization.

Urea mixers are often shaped as circular diaphragms to be inserted inside a cylindrical section of the exhaust gas outlet conduit, just before the catalyst; to implement a mixer, the process usually starts by properly shaping a ribbon-like metal strip, its edges featuring some projecting fins which will then operate as baffles, usually made of stainless steel; an example of these devices is disclosed in WO2009049790A1 or in EP2098697A1.

Said metal strip is usually prepared according to processes known in the art, starting from a metal rolled section, via a number of progressive mouldings, as disclosed in US2010218490A1.

This way, the flat sheet is shaped through a number of shearing, drilling, and bending operations or others, progressively performed in subsequent stations.

The die is located on a press complete with a feeder, whose task is that of making the strip advance at every stroke of the press, from one station to the next one.

Manufacturing a progressive die is rather hard to do and is only justified economically wise in association with quantitatively high productions, whereas a simple moulding technique is usually adopted in the case of smaller productions.

However, a variety of subsequent operations are necessary even in the case of progressive moulding to complete the shaping of every mixer, which results in a rather low, hence expensive, production.

Starting from a semi-finished product realized in the shape of a strip, a known procedure for realizing mixers consists of repeatedly bending said metal strip, through a number of further progressive moulding operations, so as to transform it into a serpentine drawn up inside a circumference, the latter having such a diameter as to make it possible to insert said diaphragm inside the cylindrical conduit that carries the urea and the exhaust gases toward the catalyst. As already said, the edges of said ribbon-like strip feature slightly bent thin blades; after shaping the strip as a diaphragm said thin blade operate as baffles and properly orient the flow of gas and urea.

### Purposes and summary of the invention

The objects of this invention are a method and a machine capable of substantially reducing the production costs an times of said mixers.

These objects are achieved by a machine according to claim 1 and by a method according to claim 8. The dependent claims define preferred embodiments of the present invention.

Said result is achieved by using a two-and-a-half axis self acting machine specifically developed for this purpose, starting from a three-axis or two-and-a-half-axis numerical control milling machine, specifically modified by replacing its spindle with a probe tip.

It is known in this sector that the two-and-a-half axis machines, even though capable of moving the tool in three directions, manage interpolation on two axes only; the third axis is dedicated to the vertical movement of the tool, in this case the probe tip, which does not move continuously along this axis, but just preliminarily occupies a position intermediate between an upper position and a lower position, or vice versa. As referred to the most advanced three- or more-axis machines, their control is particularly simplified, which results in a cost saving, even though it is not possible to operate on three axes simultaneously.

So, the concept of two-and-a-half axis means that the modeling movement takes place on one axis, but the machine shall be capable of performing a preliminary tool positioning along the vertical axis in all cases; being it a mutual positioning, this one also possibly takes place by lifting or lowering the work plane with respect to the height of the tool.

As a further modification, on the bed of said milling machine the guides originally used to clamp the workpieces are removed and a movable dies assembly is secured thereto, for instance a pneumatically or hydraulically operated one, capable of making each of said movable dies vertically displace, independently of each other, from a lower rest position to an upper working position.

Said movable dies assembly comprises a number of dies which said probe tip makes the semi-finished strip-shaped product adhere to. In their lower positions the dies are retracted inside the base of the dies assembly, whereas the dies are extracted from said base in their upper position.

The lateral surface of every die is shaped as a developable ruled surface, whose generatrices are vertical. The set of the surfaces enclosed inside the directrix curves of the ruled surfaces of all dies is substantially inscribable in a circumference coincident with the section of the exhaust system's piping that will receive the finished mixer.

In more detail, the sequence of the operations is as follow.

First of all the semi-finished product, having the shape of a ribbon-like strip, is fixed to a first die; for this purpose, said first die can advantageously feature a slot or indentation suitable for receiving said strip which, in practice, is positioned as a knife, so that which longitudinal axis lies on a horizontal plane whereas the surface of the strip lies in a vertical plane.

Then the probe tip approaches the strip and exerts a horizontal thrust thereupon so as to model it in such a way as to make it adhere to the lateral surface of the die; finally the probe tip settles in a rest position. Advantageously can the head of the probe tip be equipped with a vertical-axis roller, so as to reduce the friction between the strip and the probe tip itself by transforming it from sliding friction into rolling friction.

Having made the strip adhere to the lateral surface of the first die, the oledynamic control unit controls the lifting of a second die, after what the probe tip positions, exerts a horizontal thrust again so as to bend the strip and make it adhere to the lateral surface of the second die, on the side opposite to that of the first die.

This process is repeated until the last die is lifted; at that point the probe tip models the strip again, by making it adhere to the cylindrical, lateral surface of the whole dies assembly, so as to realize a ring which surrounds and encloses all of the previous bendings.

After the operating step described above, all dies are retracted inside the base, so as to disengage themselves from the now formed mixer; the latter is removed and can be passed on to an outer diameter calibrating machine.

### Brief description of the drawings

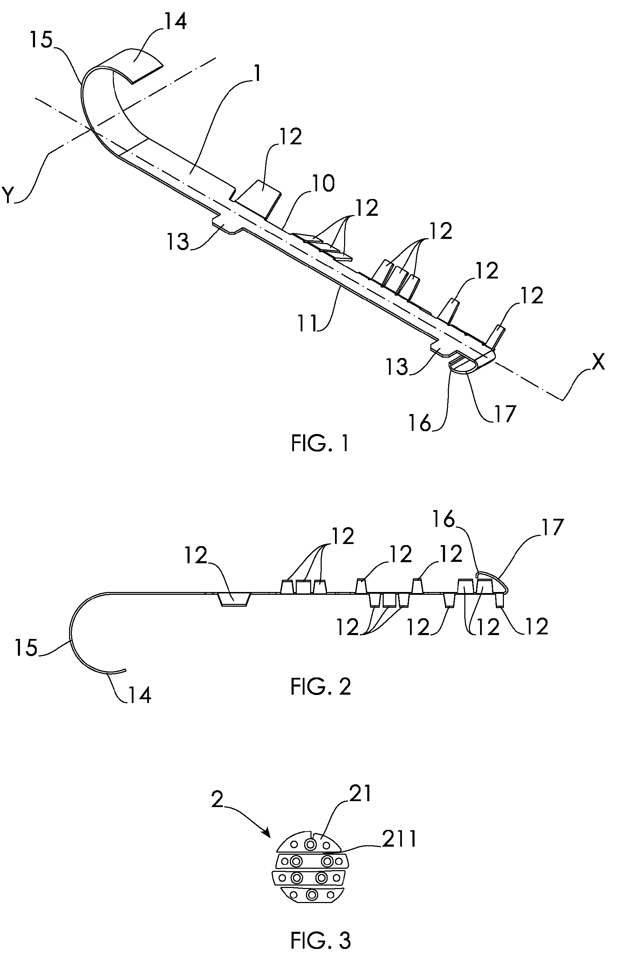

**Fig. 1** shows a possible version of a semi-finished ribbon-like strip (1), in this case one featuring cylindrical half-shell-like profiles (15, 17) at the two ends (14, 16), and borders (10, 11) featuring some projecting fins (12, 13). The (X) and (Y) axes are shown.
**Fig. 2** shows a top view of the semi-finished strip (1) represented in figure 1.
**Fig. 3** shows a top view of a movable dies assembly (2) with a first movable die (21) and an indentation or slot (211) obtained in said first movable die (21).

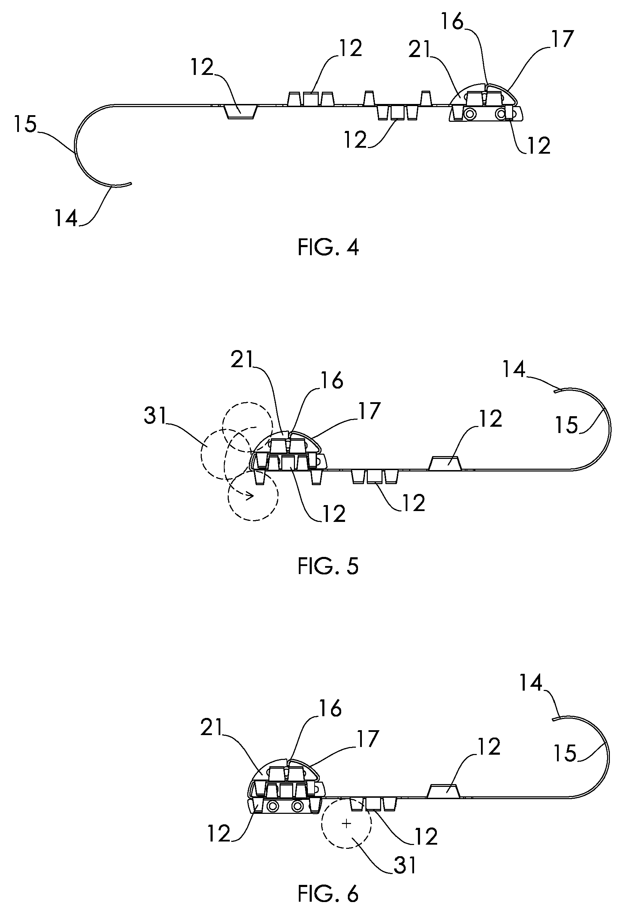

**Fig. 4** shows the initial step of the operating process, in which the semi-finished strip (1), as seen from the top, is fixed to the first movable die (21); for the sake of simplicity, the movable dies are not shown in their rest positions.
**Fig. 5** shows a step of the operating process following that shown in figure 4; dashed lines indicate the various positions assumed by the head (31) of the probe tip (3) during the operating step.
**Fig. 6** shows a step of the operating process following that shown in figure 5; a further movable die is shown here in its working position.

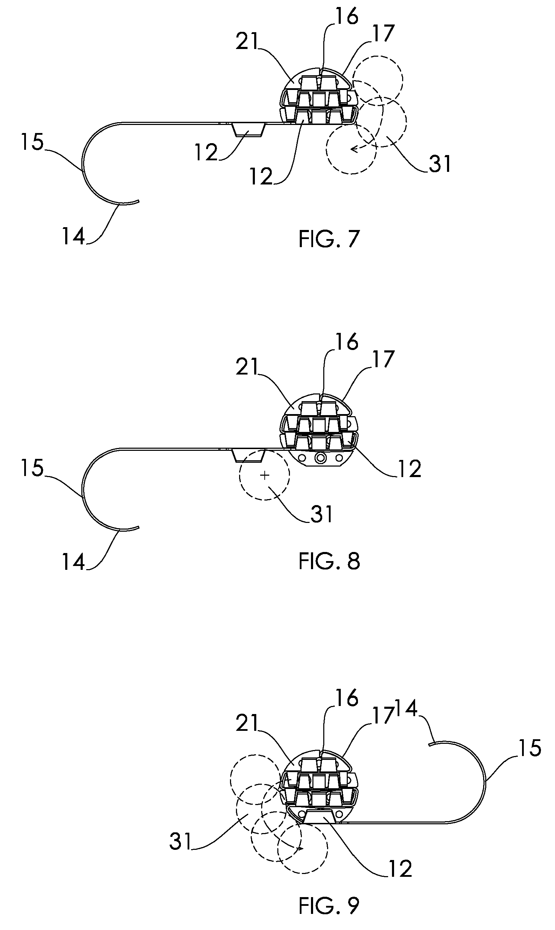

**Fig. 7** shows a step of the operating process following that shown in figure 6.
**Fig. 8** shows a step of the operating process following that shown in figure 7, with a further movable die in its working position.
**Fig. 9** shows a step of the operating process following that shown in figure 8.

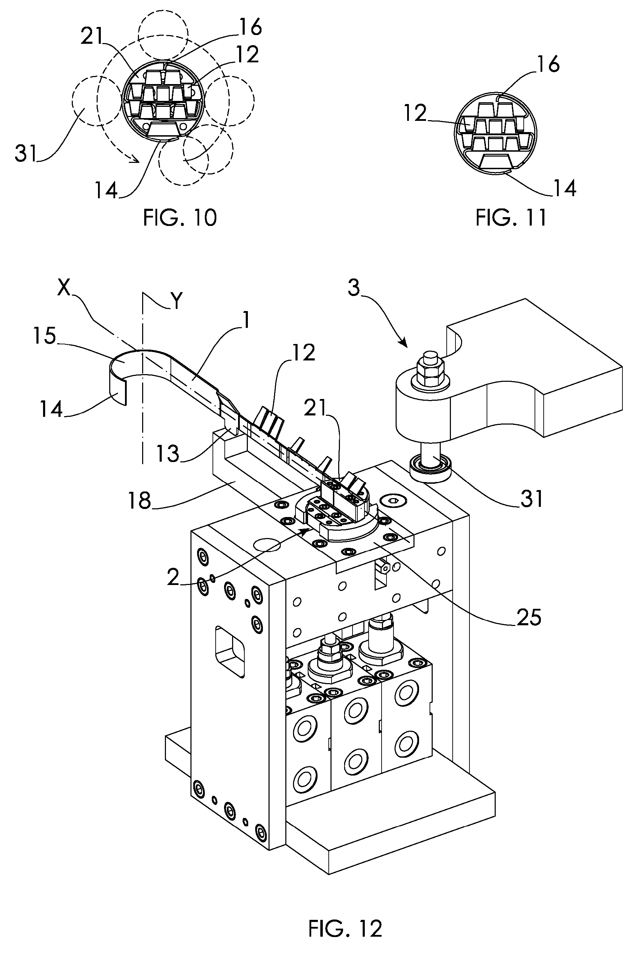

**Fig. 10** shows a step of the operating process following that shown in figure 9.
**Fig. 11** shows a top view of the finished product.
**Fig. 12** shows a view of the base (25) of the machine according to the present patent application along with the movable dies assembly (2), the probe tip (3) complete with a head (31) equipped with a vertical-axis roller, and a semi-finished strip (1) embedded in said movable dies assembly; a side support (18) is also visible, on which part of said strip (1) leans.

### Detailed description of one embodiment of the invention

The invention according to the present patent application is organized around a special machine used to manufacture mixers for smoke exhaust assemblies of vehicles and a method to use such machine.

According to a practical embodiment the subject machine can be economically and rapidly implemented by modifying an at least two-and-a-half axis self-acting machine of a type generally used for chip-removal machinings. The main modification consists of installing, on the working plane of said machine, an assembly (2) of movable dies, and of mounting, instead of the tool, a probe tip (3) which progressively models a semi-finished strip (1), so as to shape it, thanks to a number of successive machinings, as a mixer of exhaust devices for engines of motor vehicles. Said dies are movable between a retracted rest position and an extracted working position; also, according to a particularly appropriate embodiment, every movable die is driven oleodynamically, even though any other types of driving can be adopted, for instance pneumatic or mechanical.

Said dies are progressively extracted and the modeling action is performed by said probe tip in a coordinated manner with said extractions.

Very advantageously can the head (31) of said probe tip (3) be equipped with a vertical-axis roller to reduce the frictions between said strip (1) and said probe tip (3) by transforming sliding frictions into rolling frictions. The case might occur whereby the finished mixer features reliefs along the outer circumference; in this event the lateral surface of said roller (31) of said probe tip can be so shaped as not to deform said reliefs if they had already been imprinted on the semi-finished strip (1).

If an innovative machine like that roughly described above is available, mixer preparation is organized into the following main operating steps.

Starting from a metal rolled section, a semi-finished product (1) is prepared, by using a multiple die or another method known in the art, then it is sheared into rectangular strips featuring an elongated shape, having along an edge (10) a plurality of projecting fins (12), having a rectangular or trapezoidal shape, connected to said edge (10) along one of their shorter sides or along their major base.

Said semi-finished strip possibly presents, along the edge (11) opposite to said edge (10), other rectangular and/or trapezoidal projecting fins (13).

Subsequently said semi-finished strip (1) is fixed to a first movable die (21), the latter being part of an assembly of movable dies (2) fixed above the bed of an at least two-and-a-half axis, numerical control self-acting machine, specifically modified through the replacement of the spindle with a vertical-axis probe tip (3) assembly. According to a practical solution, this fixing takes place by forcing the semi-finished strip (1) inside an indentation (211) obtained in said first movable die (21), by possibly embedding in said indentation (211) one of the rectangular projecting fins (13). According to a convenient implementation said first movable die (21) is possibly composed of two or several single dies mounted onto the same movable device, a space suitable for receiving sais semi-finished strip (1) being interposed between them. After being positioned as described above the strip (1) is placed "as a knife", i.e. in such a way that the two bigger faces are vertical whereas its longitudinal axis lays in a horizontal plane.

A particularly complete embodiment of the invention also comprises a device to keep the semi-finished strip (1) inside the indentation (211), for instance thanks to the pressure exerted onto said semi-finished strip (1) by a small horizontal-axis pneumatic piston.

The machine can also be advantageously provided with specially designed supports (18) worth to hold the semi-finished strip (1) in position during the next machinings. The positioning having been performed, the modeling step begins and takes place as a cold plastic deformation of said semi-finished strip (1), thanks to the horizontal thrust exerted by said probe tip (3), which makes it adhere to the lateral surface of said first movable die (21).

The other movable dies are then progressively extracted and the modeling action on said semi-finished strip (1) exerted by said probe tip (3) continues in a coordinated manner with said extractions, by making said semi-finished strip (1) adhere to the lateral surface of the individual die that is in turn extracted.

After completing the machining by plastic deformation of the strip (1), all movable dies are retracted inside the base (25), so as to disengage them from the just formed mixer; this way, the latter is removed from he special machine and is submitted to its final calibration according to methods known in the art.

According to some embodiments, in the preliminary multiple-die machining, the first end (14) of said semi-finished product (1) can be modeled in such a way as to describe a first cylindrical half-shell (15), whose (Y) axis is perpendicular to the (X) axis of said rectangular strip, whereas the second end (16) of said semi-finished product (1) can be modeled so as to constitute a portion of a second cylindrical half-shell (17), whose radius is shorter than that of said first half-shell (15); conversely, according to other embodiments, all machinings by plastic deformation that entail the formation of plastic hinges with their axis parallel to the (Y) axis take place under the direct action exerted by the probe tip.

It is worth to note how much is the shape of the movable dies important and how much carefully should it be studied to minimize the effects of elastic returns.

## Claims

1. A Machine for the realization of urea mixers for exhaust devices of vehicles equipped with internal-combustion engines, comprising a working plane on which there is an assembly of movable dies (2) , **characterized in that** around said movable dies (2) a probe tip (3), at least horizontally movable around two axes and vertically movable from a superior rest position to an inferior working position, progressively models a semi-finished ribbon-like strip (1), so as to shape it like a mixer for exhaust devices for engines of motor vehicles, each of said movable dies being mounted onto a device that makes it movable between a retracted rest position, in which the die is accommodated inside a base (25), and an extracted working position, said movable dies being progressively extracted and the modeling action onto said semi-finished ribbon-like strip (1) being exerted by said probe tip (3) coordinately with said extractions, thus making said semi-finished strip (1) adhere to the lateral surface of the die that is each time extracted.

2. A machine according to claim 1, **characterized in that** said assembly of movable dies (2) comprises a first die (21) featuring a slot (211) suitable for receiving and holding said semi-finished ribbon-like strip (1).

3. A machine according to claim 2, **characterized in that** said assembly of movable dies (2) comprises an auxiliary device to lock the semi-finished ribbon-like strip (1) internally to said slot (211).

4. A machine according to claim 2 or 3, **characterized in that** said first die (21) is structurally made up of two or several single dies mounted on one movable device, a space being interposed to receive said semi-finished ribbon-like strip (1).

5. A machine according to any preceding claim, **characterized in that** the head of said probe tip (3) is provided with a vertical-axis roller (31) to reduce the frictions between said semi-finished ribbon-like strip (1) and said probe tip (3).

6. A machine according to any preceding claim, **characterized in that** the lateral surface of said roller (31) includes slots suitable for receiving small reliefs possibly present on the surface of said semi-finished ribbon-like strip (1).

7. A machine according to any preceding claim, **characterized in that** said base (25) comprises at least one side support (18) on which part of said strip (1) leans to easily find the correct positioning and to reduce the risk of possible displacements during the machining operations.

8. A method to produce urea mixers for exhaust devices of vehicles equipped with internal-combustion engines, comprising the following operating steps:
- preparation, by means of a gang die or another known technology and starting from a metal rolled section, of a ribbon-like semi-finished product (1), sheared in such a way as to form an extended rectangular strip, featuring, along an edge (10), a plurality of extended projecting fins (12), having a rectangular or trapezoidal shape, connected to said edge (10) along one of their short sides or along their major base respectively and possibly featuring, also along the edge (11) opposite to said edge (10), one or several projecting fins (13), be they rectangular or of any other shapes, **characterized in that** it further comprises the following operation steps:
- placement of said semi-finished ribbon-like strip (1) into a slot (211) present in a first movable die (21) being part of an assembly of movable dies (2), the latter being fixed above the bed of a numerical control automatic machine, whose spindle is at least horizontally movable around two axes and vertically movable from a superior rest position to an inferior working position, expressly modified through the replacement of the spindle by a vertical-axis probe tip assembly (3); after placement, said strip (1) being positioned in such a way that its longitudinal axis lies in a horizontal plane and conversely its surface lies in a vertical plane, possibly with the help of supporting elements (18) and locking means;
- modeling of said semi-finished ribbon-like strip (1) by plastic deformation, thanks to the horizontal thrust exerted by said probe tip (3), which makes it adhere to the lateral surface of said first movable die (21);
- progressive extraction of the remaining movable dies and consequent modeling actions exerted by said probe tip (3) coordinately with said extractions, thus making said semi-finished strip (1) adhere to the lateral surface of the die that is each time extracted;
- retraction of said movable dies inside said base (25) so as to disengage them from the just formed mixer;
- removal of the mixer and its final calibration.

## Patentansprüche

1. Maschine zur Herstellung von Harnstoffmischern für Abgasanlagen von Fahrzeugen, die mit Verbrennungsmotoren ausgestattet sind, umfassend eine Arbeitsebene, auf der sich eine Gruppe bewegbarer Gesenke (2) befindet, **dadurch gekennzeichnet, dass** um die bewegbaren Gesenke (2) herum eine mindestens horizontal um zwei Achsen bewegbare und vertikal von einer oberen Ruheposition in eine untere Arbeitsposition bewegbare Tastspitze (3) stufenweise einen halbfertigen bandähnlichen Streifen (1) formt, sodass dieser wie ein Mischer für Abgasanlagen für Motoren von Kraftfahrzeugen ausgebildet ist, wobei ein jedes dieser bewegbaren Gesenke auf einer Vorrichtung montiert ist, die dieses zwischen einer eingefahrenen Ruheposition, in der das Gesenk in einer Basis (25) untergebracht ist, und einer ausgefahrenen Arbeitsposition, in der die bewegbaren Gesenke stufenweise ausgefahren werden und die Formungswirkung auf den halbfertigen bandähnlichen Streifen (1) von der Tastspitze (3) in Koordination mit dem Ausfahren ausgeübt wird, sodass der halbfertige Streifen (1) an der seitlichen Oberfläche des jeweils ausgefahrenen Gesenks haftet, bewegbar macht.

2. Maschine nach Anspruch 1, **dadurch gekennzeichnet, dass** die Gruppe bewegbarer Gesenke (2) ein erstes Gesenk (21) umfasst, das eine Kerbe (211) aufweist, die geeignet ist, um den halbfertigen bandähnlichen Streifen (1) aufzunehmen und zu halten.

3. Maschine nach Anspruch 2, **dadurch gekennzeichnet, dass** die Gruppe bewegbarer Gesenke (2) ein Hilfsvorrichtung umfasst, um den halbfertigen bandähnlichen Streifen (1) innerhalb der Kerbe (211) festzuspannen.

4. Maschine nach Anspruch 2 oder 3, **dadurch gekennzeichnet, dass** das erste Gesenk (21) in seinem Aufbau aus zwei oder mehreren einzelnen Gesenke besteht, die auf einer bewegbaren Vorrichtung montiert sind, wobei ein Bereich dazwischen eingesetzt ist, um den halbfertigen bandähnlichen Streifen (1) aufzunehmen.

5. Maschine nach einem der vorhergehenden Ansprüche, **dadurch gekennzeichnet, dass** der Kopf der Tastspitze (3) mit einer Walze (31) mit vertikaler Achse versehen ist, um die Reibungen zwischen dem halbfertigen bandähnlichen Streifen (1) und der Tastspitze (3) zu reduzieren.

6. Maschine nach einem der vorhergehenden Ansprüche, **dadurch gekennzeichnet, dass** die seitliche Oberfläche der Walze (31) Kerben einschließt, die geeignet sind, um kleine Senkungen aufzunehmen, die eventuell auf der Oberfläche des halbfertigen bandähnlichen Streifens (1) ausgebildet sind.

7. Maschine nach einem der vorhergehenden Ansprüche, **dadurch gekennzeichnet, dass** die Basis (25) mindestens eine Seitenhalterung (18) umfasst, an der ein Teil des Streifens (1) anliegt, um problemlos die korrekte Positionierung zu finden und das Risiko möglicher Verschiebungen während des Maschinenbetriebs zu reduzieren.

8. Verfahren zur Herstellung von Harnstoffmischern für Abgasanlagen von Fahrzeugen, die mit Verbrennungsmotoren ausgestattet sind, umfassend folgende Betriebsschritte:
- Vorbereiten eines bandähnlichen halbfertigen Produkts (1) mittels eines Mehrfachgesenks oder einer anderen bekannten Technik, ausgehend von einem gewalzten Metallabschnitt, so abgeschert, dass ein ausgedehnter rechteckiger Streifen gebildet wird, der entlang einer Kante (10) eine Vielzahl an ausgedehnten hervorspringenden Rippen (12) aufweist, aufweisend eine rechteckige oder trapezförmige Form, verbunden mit der Kante (10) jeweils entlang einer deren kurzen Seiten oder entlang der Hauptseite und möglichst aufweisend ebenfalls entlang der der Kante (10) gegenüberliegend angeordneten Kante (11) eine oder mehrere hervorstehende Rippen (13), die entweder rechteckig sein oder irgendeine andere Form aufweisen können,
**dadurch gekennzeichnet, dass** es zudem die folgenden Betriebsschritte umfasst:
- Platzieren des halbfertigen bandähnlichen Streifens (1) in einer Kerbe (211), die in einem ersten bewegbaren Gesenk (21) ausgebildet ist, das zu einer Gruppe bewegbarer Gesenke (2) gehört, wobei Letzteres oberhalb des Betts einer NC-gesteuerten Automatikmaschine positioniert ist, deren Spindel zumindest horizontal um zwei Achsen bewegbar und vertikal von einer oberen Ruheposition in eine untere Arbeitsposition bewegbar ist, ausdrücklich modifiziert durch den Ersatz der Spindel durch eine Tastspitzengruppe (3) mit vertikaler Achse, wobei der Streifen (1) nach dem Platzieren so positioniert wird, dass seine Längsachse in einer horizontalen Ebene liegt und seine Oberfläche dagegen in einer vertikalen Ebene liegt, möglichst mithilfe von Halterungselementen (18) und Spannmitteln;
- Formen des halbfertigen bandähnlichen Streifens (1) durch plastische Verformung dank des waagerechten Seitenschubs, der von der Tastspitze (3) ausgeübt wird, die dafür sorgt, dass dieser an der seitlichen Oberfläche des ersten bewegbaren Gesenks (21) haftet;
- progressives Ausfahren der verbleibenden bewegbaren Gesenke und entsprechendes Ausüben von Formungsvorgängen durch die Tastspitze (3) in Koordination mit dem Ausfahren, sodass dafür gesorgt wird, dass der halbfertige Streifen (1) an der seitlichen Oberfläche des jeweils ausgefahrenen Gesenks haftet;
- Einfahren der bewegbaren Gesenke in die Basis (25), sodass diese von dem soeben geformten Mischer gelöst werden;
- Entfernen des Mischers und dessen abschließendes Kalibrieren.

## Revendications

1. Machine pour la réalisation de mélangeurs d'urée pour dispositifs d'échappement de véhicules équipés de moteurs à combustion interne, comprenant un plan de travail sur lequel il y a un ensemble de matrices mobiles (2), **caractérisée en ce que** autour desdites matrices mobiles (2) un palpeur (3), au moins horizontalement mobile autour de deux axes et verticalement mobile entre une position supérieure de repos et une position inférieure de travail, progressivement modèle une bande semi-finie en forme de ruban (1), de manière à le façonner comme un mélangeur pour dispositifs d'échappement pour moteurs à combustion interne, chacune desdites matrices mobiles étant montée sur un dispositif qui le rend mobile entre une position reculée de repos, dans laquelle la matrice est logée à l'intérieur d'une base (25), et une position extraite de travail, lesdites matrices mobiles étant progressivement extraites, et l'action de modelage sur ladite bande semi-finie en forme de ruban (1) étant exercée par ledit palpeur (3) en coordination avec lesdites extractions, ainsi faisant adhérer ladite bande semi-finie en forme de ruban (1) à la surface latérale de la matrice étant tour à tour extraite.

2. Machine selon la revendication 1, **caractérisée en ce que** ledit ensemble de matrices mobiles (21) comprend une première cavité (211) adaptée à recevoir et garder en position ladite bande semi-finie en forme de ruban (1).

3. Machine selon la revendication 2, **caractérisée en ce que** ledit ensemble de matrices mobiles (2) comprend un dispositif auxiliaire pour bloquer la bande semi-finie en forme de ruban (1) à l'intérieur de ladite cavité (211).

4. Machine selon la revendication 2 ou 3, **caractérisée en ce que** ladite première matrice (21) est structurellement formée de deux ou plusieurs matrices individuelles montées sur le même dispositif mobile, un espace étant interposé pour recevoir ladite band semi-finie en forme de ruban (1).

5. Machine selon l'une quelconque des revendications précédentes, **caractérisée en ce que** la tête dudit palpeur (3) est équipée d'un rouleau à axe vertical (31) pour réduire les frottements entre ladite bande semi-finie en forme de ruban (1) et ledit palpeur (3).

6. Machine selon l'une quelconque des revendications précédentes, **caractérisée en ce que** la surface latérale dudit rouleau (31) inclut des cavités adaptées à recevoir de petites saillies éventuellement présentes sur la surface de ladite bande semi-finie en forme de ruban (1).

7. Machine selon l'une quelconque des revendications précédentes, **caractérisée en ce que** ladite base (25) comprend au moins un support latéral (18) sur lequel s'appuie une partie de ladite bande (1) pour aisément trouver l'exact positionnement et pour réduire le risque de possibles déplacements pendant les opérations de façonnage.

8. Procédé pour produire des mélangeurs d'urée pour dispositifs d'échappement de véhicules équipés de moteurs à combustion interne, comprenant les phases opérationnelles suivantes :
- préparation, au moyen d'une matrice multiple ou d'une autre technologie connue et à partir d'un laminé métallique, d'un produit semi-fini en forme de ruban (1), tranché de façon à former une bande rectangulaire étendue ayant, le long d'un bord (10), une pluralité d'ailettes saillantes étendues (12), ayant une forme rectangulaire ou trapézoïdale, reliées audit bord (10) le long respectivement d'une de leur petites longueurs ou le long de leur grande longueur et ayant éventuellement, également le long du bord (10) opposé audit bord (10), une ou plusieurs ailettes saillantes (13), en forme rectangulaire ou en toute autre forme,
**caractérisé en ce que** qu'il comprend également les phases opérationnelles suivantes :
- placement de ladite bande semi-finie en forme de ruban (1) dans une cavité (211) présente dans une première matrice mobile (21) faisant partie d'un ensemble de matrices mobiles (2), celui-ci étant fixé au-dessus du banc d'une machine-outil automatique à commande numérique, le mandrin de laquelle est au moins mobile horizontalement autour de deux axes et mobile verticalement entre une position supérieure de repos et une position inférieure de travail, modifiée exprès à travers le remplacement du mandrin par un ensemble palpeur (3) à axe vertical; après le placement, ladite bande (1) étant positionnée de sorte que son axe longitudinal se trouve dans un plan horizontal tandis que sa surface se trouve dans un plan vertical, le cas échéant à l'aide d'éléments de support (18) et de moyens de blocage;
- modelage de ladite bande semi-finie en forme de ruban (1) par déformation plastique, grâce à la poussée horizontale, exercée par ledit palpeur (3), qui le fait adhérer à la surface latérale de ladite première matrice mobile (21);
- extraction progressive des autres matrices mobiles et actions de modelage conséquentes exercées par ledit palpeur (3) en coordination avec les dites extractions, faisant ainsi adhérer ladite bande semi-finie en forme de ruban (1) à la surface latérale de la matrice qui est tour à tour extraite;
- rétraction desdites matrices mobiles à l'intérieur de ladite base (25) de façon à les libérer du mélangeur à peine formée;
- enlèvement du mélangeur et sa calibration finale.
